# EUROPEAN PATENT APPLICATION

(11) **EP 4 585 542 A1**
(43) Date of publication of application: **16.07.2025**
(21) Application number: 24218782.1
(22) Date of filing: 10.12.2024
(51) Int. Cl.: B65G 47/86

(54) **CONTAINER CONVEYANCE DEVICE**

(30) Priority: 10.01.2024 JP 2024002160
(71) Applicant: Shibuya Corporation, Kanazawa-shi, Ishikawa 920-8681 (JP)
(72) Inventor: YONEMURA, Yuichi, Ishikawa, 920-8681 (JP); SHOMIZU, Naoto, Ishikawa, 920-8681 (JP)
(74) Representative: Mewburn Ellis LLP

(57) **Abstract**

To achieve an action of retracting intermediate grippers GB and adjustment of a conveyance pitch by one intermediate rotary wheel. A conveyance pitch in a sixth rotary wheel (downstream rotary wheel) is set to be smaller than a conveyance pitch in a fourth rotary wheel H4 (upstream rotary wheel). A rocking unit and a switching unit 25 are provided to a fifth rotary wheel H5 (intermediate rotary wheel), the rocking unit causing a conveyance pitch in the fifth rotary wheel H5 to be equal to a conveyance pitch in the sixth rotary wheel by rocking intermediate grippers GB at a downstream-side delivery position P2, at which delivered to the sixth rotary wheel, the switching unit 25 switching the intermediate grippers GB to a retracted state in which interference with PET bottles 1 held by the fourth rotary wheel H4 can be prevented.

## Description

### BACKGROUND OF THE INVENTION

### Field of the Invention

The present invention relates to a container conveyance device, and more particularly to a container conveyance device including an intermediate rotary wheel that delivers containers from an upstream rotary wheel to a downstream rotary wheel.

### Description of the Related Art

Conventionally, for a beverage production line that performs, for example, processing ranging from molding PET bottles as containers to filling beverage, there is a known beverage production line including a blow molding part and a filling part, the blow molding part molding PET bottles, the filling part filling beverage or the like into the PET bottles. In these blow molding part and filling part, containers are conveyed by a container conveyance device including a plurality of rotary wheels (Japanese Patent No. 5211517, Japanese Patent No. 6861101) .

The container conveyance devices described in Japanese Patent No. 5211517 and Japanese Patent No. 6861101 include an upstream rotary wheel, a downstream rotary wheel, an intermediate rotary wheel, and an opening/closing unit, the upstream rotary wheel including upstream grippers configured to grip containers, the downstream rotary wheel including downstream grippers configured to grip the containers, the intermediate rotary wheel being provided between the upstream rotary wheel and the downstream rotary wheel, and including intermediate grippers configured to grip the containers, the opening/closing unit being configured to open and close gripping members, which constitute the intermediate grippers.

Of these container conveyance devices, the container conveyance device of Japanese Patent No. 5211517 continues rotation of the intermediate rotary wheel and the downstream rotary wheel also in the case in which the upstream rotary wheel, which constitutes the blow molding part, is abnormally stopped, thus preventing stoppage for respective devices constituting the filling part.

To achieve the above, in Japanese Patent No. 5211517, a switching unit is provided to prevent the gripping members of the intermediate grippers of the intermediate rotary wheel that continues rotation from interfering with a container held by the upstream gripper of the upstream rotary wheel that is stopped, the switching unit being configured to open the gripping members of the intermediate grippers to a retracted state in which the opening degree of the gripping members is larger than that in a normal state.

In contrast, in the container conveyance device of Japanese Patent No. 6861101, the conveyance pitch of a container in the downstream rotary wheel is set to be smaller than the conveyance pitch of a container in the upstream rotary wheel and hence, the conveyance pitch is adjusted by the intermediate rotary wheel.

To achieve the above, in Japanese Patent No. 6861101, a rocking unit configured to rock the intermediate grippers is provided to the intermediate rotary wheel and, at a downstream-side delivery position, at which containers are delivered between the intermediate rotary wheel and the downstream rotary wheel, the conveyance pitch is adjusted by rocking the intermediate grippers such that adjacent intermediate grippers have a small interval.

However, in the case in which the intermediate rotary wheel described in the above-mentioned Japanese Patent No. 5211517 and the intermediate rotary wheel described in the above-mentioned Japanese Patent No. 6861101 are provided to a beverage production line, there is a problem of an increase in installation space, the intermediate grippers being retracted when the upstream rotary wheel is stopped in the intermediate rotary wheel described in the above-mentioned Japanese Patent No. 5211517, the intermediate rotary wheel described in the above-mentioned Japanese Patent No. 6861101 performing adjustment of a conveyance pitch.

The present invention has been made in view of such a problem, and it is an object of the present invention to provide a container conveyance device that can achieve an action of retracting intermediate grippers and adjustment of a conveyance pitch by one intermediate rotary wheel.

### SUMMARY OF THE INVENTION

In other words, a container conveyance device comprising: an upstream rotary wheel including an upstream gripper configured to grip a container; a downstream rotary wheel including a downstream gripper configured to grip the container; an intermediate rotary wheel provided between the upstream rotary wheel and the downstream rotary wheel, and including an intermediate gripper configured to grip the container; and an opening/closing unit configured to open and close a gripping member constituting the intermediate gripper, the container conveyance device being characterized in that
a conveyance pitch of the container in the downstream rotary wheel is set to be smaller than a conveyance pitch of the container in the upstream rotary wheel,
a rocking unit configured to rock the intermediate gripper is provided to the intermediate rotary wheel and, at a downstream-side delivery position, at which delivered to the downstream rotary wheel, a conveyance pitch of the container is caused to be equal to the conveyance pitch of the downstream gripper by rocking the intermediate gripper such that adjacent intermediate grippers approach each other,
a switching unit is further provided to the intermediate rotary wheel, the switching unit being configured to switch the gripping member of the intermediate gripper between a normal state and a retracted state, the container being delivered in the normal state, the gripping member being retracted to prevent interference with the container held by the upstream gripper in the retracted state, and
in a case in which the upstream rotary wheel is stopped, but rotation of the intermediate rotary wheel is continued, the switching unit switches the gripping member of the intermediate gripper from the normal state to the retracted state before the intermediate gripper reaches an upstream-side delivery position, at which the container is delivered from the upstream rotary wheel.

### Advantageous Effect of Invention

According to the above-mentioned invention, the rocking unit and the switching unit are provided to one intermediate rotary wheel and hence, a conveyance pitch can be adjusted between the upstream rotary wheel and the downstream rotary wheel and, in addition, when the upstream rotary wheel is abnormally stopped, it is possible to prevent the intermediate gripper from colliding with the container held by the upstream gripper.

### BRIEF DESCRIPTION OF THE DRAWINGS

FIG. 1 is a plan view of a beverage production line according to the present embodiment;
FIG. 2 is a plan view showing wheels ranging from an upstream wheel to a downstream wheel;
FIG. 3 is a cross-sectional view of a sterilizing unit;
FIG. 4 is a diagram illustrating an intermediate gripper;
FIG. 5 is a diagram illustrating a retracted state of the intermediate gripper; and
FIG. 6 is a perspective view illustrating the retracted state of the intermediate gripper.

### DETAILED DESCRIPTION OF THE INVENTION

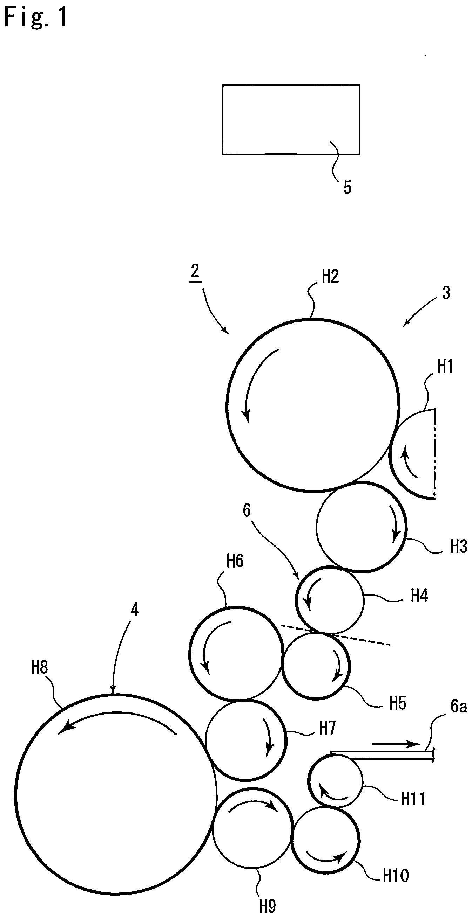

Hereinafter, an embodiment shown in the drawings is described. FIG. 1 shows a beverage production line 2 that performs processing from molding PET bottles 1 as containers to filling beverage. The beverage production line 2 includes a blow molding part 3 and a filling part 4, the blow molding part 3 forming parisons into PET bottles 1 by blow molding, the filling part 4 performing processing, such as cleaning and filling of beverage, on the PET bottles 1 formed by blow molding. The beverage production line 2 is controlled by a control unit 5 formed of a computer or the like.

The parisons and the PET bottles 1 are conveyed by a container conveyance device 6 according to the present invention, the container conveyance device 6 comprising first to eleventh rotary wheels H1 to H11. Grippers provided on the outer periphery of the respective rotary wheels H deliver the PET bottles 1 at delivery positions, at which the adjacent rotary wheels H are approximate to each other, to convey the PET bottles 1 along a conveyance path shown by thick lines in FIG. 1.

The blow molding part 3 includes the first to fourth rotary wheels H1 to H4 of the container conveyance device 6. The first rotary wheel H1 constitutes a supply unit configured to supply parisons. The second rotary wheel H2 constitutes a blow molding unit configured to form the parisons into PET bottles 1 by blow molding. The third rotary wheel H3 constitutes a discharging unit. The fourth rotary wheel H4 constitutes a delivering unit configured to deliver the PET bottles 1 to the filling part 4.

The filling part 4 includes the fifth to eleventh rotary wheels H5 to H11 of the container conveyance device 6 and a discharging conveyor 6a. The fifth rotary wheel H5 constitutes a sterilizing unit configured to sterilize the PET bottles 1. The sixth rotary wheel H6 constitutes a cleaning unit configured to clean the PET bottles 1. The seventh rotary wheel H7 constitutes a supply unit. The eighth rotary wheel H8 constitutes a filling unit configured to fill liquid into the PET bottles 1. The ninth rotary wheel H9 constitutes a discharging unit. The tenth rotary wheel H10 constitutes a capping unit configured to mount caps on the PET bottles 1. The eleventh rotary wheel H11 constitutes a discharging unit configured to discharge the PET bottles 1 to the discharging conveyor 6a.

In the present embodiment, the blow molding part 3 and the filling part 4 can be separately controlled by the control unit 5. The first to fourth rotary wheels H1 to H4, which constitute the blow molding part 3, and the fifth to eleventh rotary wheels H5 to H11, which constitute the filling part 4, are driven by different drive sources.

Therefore, even in a case in which the blow molding part 3, which is disposed on the upstream side, is abnormally stopped by the control unit 5, the filling part 4, which is disposed on the downstream side, can continue to be actuated and hence, a series of processing, such as filling of beverage and capping, can be completed for the PET bottles 1 held by the filling part 4.

The blow molding unit, which constitutes the blow molding part 3, the cleaning unit and the filling unit, which constitute the filling part 4, and the capping unit are conventionally known and hence, detailed description of such components will be omitted.

In the container conveyance device 6 of the present embodiment, a conveyance pitch of a PET bottle 1 in the filling part 4 is set to be smaller than a conveyance pitch of a PET bottle 1 in the blow molding part 3. To be more specific, the conveyance pitch in the filling part 4 is set to 30π, whereas the conveyance pitch in the blow molding part 3 is set to 48π.

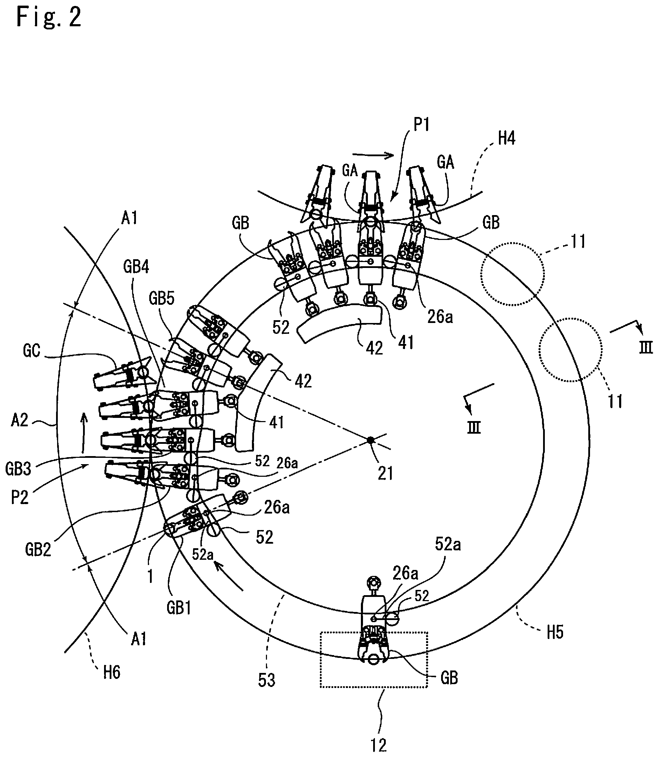

FIG. 2 is an enlarged view of the fourth to sixth rotary wheels H4 to H6 located at the boundary between the blow molding part 3 and the filling part 4. The fourth rotary wheel H4 located at the downstream end of the blow molding part 3 constitutes an upstream rotary wheel according to the present invention, the fifth rotary wheel H5 located at the upstream end of the filling part 4 constitutes an intermediate rotary wheel according to the present invention, and the sixth rotary wheel H6 constitutes a downstream rotary wheel according to the present invention.

The fifth rotary wheel H5 constitutes the sterilizing unit configured to sterilize PET bottles 1, and delivers PET bottles 1 supplied from the fourth rotary wheel H4, at a conveyance pitch of 48π, to the sixth rotary wheel H6 at a conveyance pitch of 30π. That is, the fifth rotary wheel H5 is also configured to be capable of adjusting a conveyance pitch.

The fourth rotary wheel H4 rotates in the counterclockwise direction in the drawing, and includes a plurality of upstream grippers GA along the outer peripheral edge thereof in such a way as to cause a conveyance pitch of a PET bottle 1 to be 48π.

In contrast, the sixth rotary wheel H6 also rotates in the counterclockwise direction in the drawing, and includes a plurality of downstream grippers GC along the outer peripheral edge thereof in such a way as to cause a conveyance pitch of a PET bottle 1 to be 30π.

Although a detailed description of the upstream gripper GA and the downstream gripper GC will be omitted since these components have conventionally-known configurations, each of the upstream gripper GA and the downstream gripper GC includes a pair of gripping members and a spring, the pair of gripping members gripping a PET bottle 1, the spring biasing the gripping members in a direction in which the gripping members approach each other.

The gripping members are configured to grip the neck part of the PET bottle 1, and are always biased by the spring in a closing direction, thus gripping the PET bottle 1.

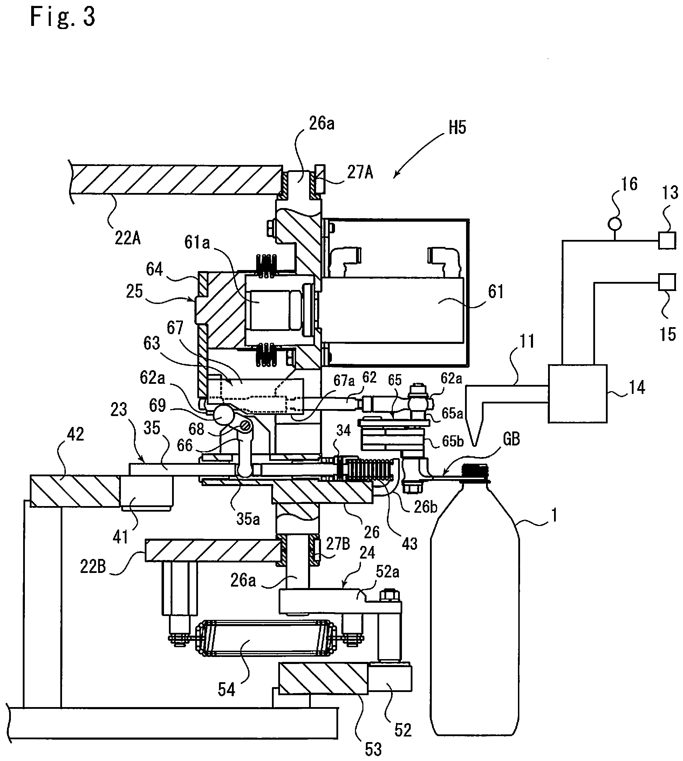

FIG. 3 shows a cross-sectional view taken along III-III in FIG. 2, and shows a cross-sectional view of the fifth rotary wheel H5, which constitutes the sterilizing unit.

The intermediate grippers GB that hold the PET bottles 1 are provided to the fifth rotary wheel H5 at predetermined intervals, and injection nozzles 11 and a reject box 12 (see FIG. 2) are provided on the conveyance path for the PET bottles 1 held by the intermediate grippers GB, the injection nozzles 11 injecting hydrogen peroxide vapor as a sterilizing agent, the reject box 12 being provided to collect PET bottles 1 for which sterilization failure is detected.

First, the sterilizing unit will be described. A hydrogen peroxide solution supply unit 13, a vaporizing chamber 14, and an air supply unit 15 are connected to the injection nozzles 11, the hydrogen peroxide solution supply unit 13 supplying hydrogen peroxide aqueous solution, the vaporizing chamber 14 causing the hydrogen peroxide aqueous solution to vaporize so as to generate hydrogen peroxide vapor, the air supply unit 15 causing the hydrogen peroxide vapor in the vaporizing chamber 14 to be injected from the injection nozzles 11. In the present embodiment, the injection nozzle 11 is provided at two positions.

The hydrogen peroxide solution supply unit 13 supplies hydrogen peroxide aqueous solution while measuring the flow rate of the hydrogen peroxide aqueous solution by a flowmeter 16. Hydrogen peroxide vapor which is vaporized in the vaporizing chamber 14 is sent to the injection nozzles 11 by air from the air supply unit 15.

Each injection nozzle 11 is provided at a position higher than the PET bottles 1 held by the intermediate grippers GB, and injects injected hydrogen peroxide vapor into the PET bottles 1 to sterilize the inside of the PET bottles 1.

The control unit 5 monitors the flow rate of hydrogen peroxide aqueous solution by the flowmeter 16. When this flow rate becomes lower than a specified value, the control unit 5 determines PET bottles 1 that passed the injection nozzles 11 at such a point in time to be sterilization failures, and such PET bottles 1 are collected in the reject box 12.

The number of positions at which the injection nozzle 11 is disposed is not limited to two, and may be three or more. It is also possible to inject hydrogen peroxide vapor to the outer parts of the PET bottles 1 to sterilize the outer parts of the PET bottles 1.

The fifth rotary wheel H5 includes an upper table 22A and a lower table 22B which rotate about a rotary shaft 21 (see FIG. 2), and the intermediate grippers GB are provided at equal intervals along the outer peripheral edges of these tables 22A, 22B.

The fifth rotary wheel H5 includes an opening/closing unit 23, a rocking unit 24, and a switching unit 25, the opening/closing unit 23 opening and closing the intermediate grippers GB, the rocking unit 24 rocking the intermediate grippers GB in the horizontal direction, the switching unit 25 switching the intermediate grippers GB between a normal state and a retracted state described later.

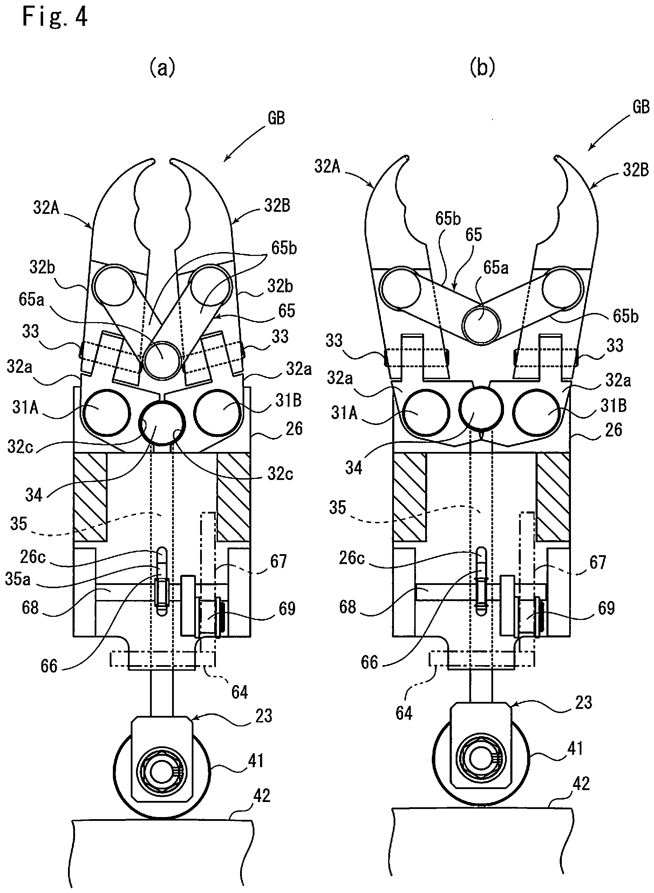

The opening/closing unit 23 opens and closes each intermediate gripper GB to a closed state (A) and an open state (B) as shown in FIG. 4, the intermediate gripper GB gripping the PET bottle in the closed state (A), the intermediate gripper GB releasing the PET bottle 1 in the open state (B).

The rocking unit 24 rocks the intermediate grippers GB as shown in FIG. 2, thus allowing the intermediate grippers GB to receive PET bottles 1 from the fourth rotary wheel H4 at a conveyance pitch of 48π, and allowing the intermediate grippers GB to deliver PET bottles 1 to the sixth rotary wheel H6 at a conveyance pitch of 30π.

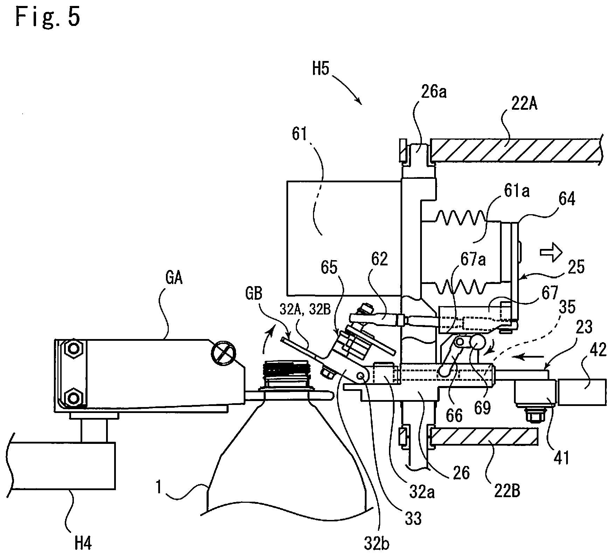

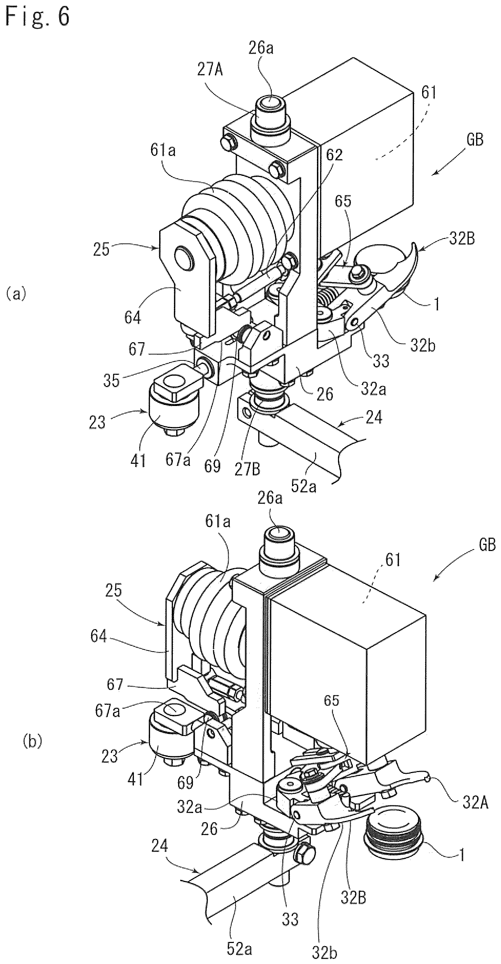

The switching unit 25 brings the intermediate grippers GB into the normal state shown in FIG. 4(A) and FIG. 4(B), thus allowing the intermediate grippers GB to make delivery of PET bottles 1 at a delivery position P1 and a delivery position P2, delivery being made from the fourth rotary wheel H4 at the delivery position P1, delivery being made to the sixth rotary wheel H6 at the delivery position P2. The switching unit 25 also brings the intermediate grippers GB into the retracted state shown in FIG. 5 and FIG. 6, thus allowing the intermediate grippers GB to be retracted from PET bottles 1 held by the upstream grippers GA even if the fourth rotary wheel H4 is abnormally stopped.

The intermediate grippers GB are provided to base members 26 provided integrally with rocking shafts 26a, which are provided between the upper table 22A and the lower table 22B in a rockable manner.

As shown in FIG. 4, each intermediate gripper GB includes a first rotary shaft 31A, a second rotary shaft 31B, a first gripping member 32A, and a second gripping member 32B, the first rotary shaft 31A and the second rotary shaft 31B being provided to the base member 26, the first gripping member 32A and the second gripping member 32B being provided to these first and second rotary shafts 31A, 31B in a rockable manner in the horizontal direction.

The upper end part of the rocking shaft 26a is pivotally supported by the upper table 22A via an upper bearing 27A, and the lower part of the rocking shaft 26a is pivotally supported by the lower table 22B via a lower bearing 27B. The rocking shaft 26a is provided such that the lower end part of the rocking shaft 26a protrudes downward from the lower table 22B.

The first gripping member 32A comprises a proximal-end-side member 32a and a distal-end-side member 32b, the proximal-end-side member 32a being coupled to the first rotary shaft 31A, the distal-end-side member 32b being provided to the proximal-end-side member 32a via a pin 33 in such a way as to be rockable upward. The second gripping member 32B comprises a proximal-end-side member 32a and a distal-end-side member 32b, the proximal-end-side member 32a being coupled to the second rotary shaft 31B, the distal-end-side member 32b being provided to the proximal-end-side member 32a via a pin 33 in such a way as to be rockable upward. The distal-end-side members 32b have a shape suitable for gripping the neck part of a PET bottle 1 from the left and right sides.

When the intermediate gripper GB is brought into the open state, so that the first gripping member 32A and the second gripping member 32B are brought into an open state as shown in FIG. 4(B), the pins 33 provided to these first and second gripping members 32A, 32B coaxially align.

When the distal-end-side members 32b of the first and second gripping members 32A, 32B are pulled upward from such a state in which the intermediate gripper GB is in the open state, the distal-end-side members 32b are sprung upward about the pins 33 (see FIG. 5).

As shown in FIG. 4, the opening/closing unit 23 includes opening/closing pins 34, opening/closing rods 35, opening/closing cam followers 41, and opening/closing cams 42, each opening/closing pin 34 having a columnar shape, and being interposed between the proximal-end-side members 32a of the first and second gripping members 32A, 32B, the opening/closing rod 35 being coupled to each opening/closing pin 34, each opening/closing cam follower 41 being provided to the other end of each opening/closing rod 35, the opening/closing cams 42 coming into contact with the opening/closing cam followers 41.

Each opening/closing pin 34 is located between the first and second rotary shafts 31A, 31B, and recessed portions 32c are formed at the proximal-end-side members 32a of the first and second gripping members 32A, 32B, the recessed portions 32c having an arc shape and being capable of housing the opening/closing pin 34.

The opening/closing rod 35 is provided in such a way as to penetrate through the base member 26 in the horizontal direction. The opening/closing pin 34 is provided at the outer peripheral end part of the opening/closing rod 35, and the opening/closing cam follower 41 is fixed to the inner peripheral end part of the opening/closing rod 35, the inner peripheral end part of the opening/closing rod 35 penetrating through the base member 26.

As shown in FIG. 3, a spring 43 is provided to the outer peripheral side of the base member 26 via a holding member 26b, and the spring 43 is mounted between the holding member and the pin 33, thus always biasing the pin 33 toward the inner peripheral side of the fifth rotary wheel H5.

The opening/closing cams 42 come into contact with the opening/closing cam followers 41 from the inner peripheral side of the fifth rotary wheel, and cause the opening/closing cam followers 41 to move in the radial direction of the fifth rotary wheel H5.

With such a configuration, when the opening/closing cam follower 41 is caused to be located on the inner peripheral side of the fifth rotary wheel H5 by the opening/closing cam 42, the opening/closing rod 35 moves the opening/closing pin 34 toward the inner peripheral side as shown in FIG. 4(A).

With such an operation, the opening/closing pin 34 is caused to be located on the inner peripheral side of the fifth rotary wheel H5 relative to the first and second rotary shafts 31A, 31B, so that the proximal-end-side members 32a of the first and second gripping members 32A, 32B are rotated about the first and second rotary shafts 31A, 31B, thus bringing the first and second gripping members 32A, 32B into the closed state.

In contrast, when the opening/closing cam follower 41 is moved toward the outer peripheral side by the opening/closing cam 42, the opening/closing pin 34 is caused to be located on the outer peripheral side of the fifth rotary wheel relative to the first and second rotary shafts 31A, 31B as shown in FIG. 4(B).

Consequently, the proximal-end-side members 32a of the first and second gripping members 32A, 32B are rotated about the first and second rotary shafts 31A, 31B, thus bringing the first and second gripping members 32A, 32B into the open state.

As shown in FIG. 2, the opening/closing cams 42 are provided at the upstream-side delivery position P1 and the downstream-side delivery position P2, PET bottles 1 being delivered from the fourth rotary wheel H4 at the upstream-side delivery position P1, PET bottles 1 being delivered to the sixth rotary wheel H6 at the downstream-side delivery position P2, and each intermediate gripper GB is opened and closed within ranges in which the opening/closing cams 42 are provided.

In contrast, in a section where the opening/closing cams 42 are not provided, each opening/closing cam follower 41 is caused to be located on the inner peripheral side of the fifth rotary wheel H5 by the biasing force of the spring 43 and hence, the intermediate gripper GB maintains the closed state.

The rocking unit 24 comprises rocking cam followers 52 and a rocking cam 53, the rocking cam followers 52 being provided to the lower end parts of the rocking shafts 26a via rocking arms 52a, the rocking shafts 26a being pivotally supported by the upper table 22A and the lower table 22B, the rocking cam 53 coming into contact with the rocking cam followers 52.

As shown in FIG. 2, the rocking cam 53 having an endless shape is provided along the rotation locus of the fifth rotary wheel H5, and a neutral zone A1 and a rocking zone A2 are set for the rocking cam 53, the intermediate grippers GB being positioned in a neutral position in the neutral zone A1, the rocking zone A2 being set in the vicinity of the downstream-side delivery position P2, at which delivered to the sixth rotary wheel H6, the intermediate grippers GB being rocked in the rocking zone A2.

When viewed in plan view, the rocking arm 52a is provided toward rearward in the rotational direction of the fifth rotary wheel H5 relative to the base member 26. A spring 54 is mounted between the rocking arm 52a and the lower table 22B and hence, the rocking cam follower 52 always maintains a contact state with the rocking cam 53.

In FIG. 2, when the rocking cam follower 52 is located in the neutral zone A1 of the rocking cam 53, the rocking unit 24 causes a line to be positioned in a neutral position in which the line extends in a diameter direction, that is, the line passes through the center of the fifth rotary wheel H5, the line being obtained by connecting the rocking shaft 26a of the intermediate gripper GB and the center of a PET bottle 1 held by the intermediate gripper GB.

When the intermediate gripper GB is positioned in the neutral position, an interval between PET bottles 1 held by adjacent intermediate grippers GB is set to be equal to the conveyance pitch in the fourth rotary wheel H4, that is, set to 48π.

In contrast, when the intermediate gripper GB is moved and located in the rocking zone A2, the rocking cam follower 52 is moved toward the inner peripheral side or the outer peripheral side of the fifth rotary wheel H5 by the rocking cam 53.

When the intermediate gripper GB positioned in the neutral position reaches the rocking zone A2 due to the rotation of the fifth rotary wheel H5 (denoted by "GB1" in the drawing), the intermediate gripper GB then approaches the downstream-side delivery position P2, at which delivered to the sixth rotary wheel H6 (denoted by "GB2" in the drawing).

Then, in the intermediate gripper GB2, the rocking cam 53 moves the rocking cam follower 52 toward the outer side in the radial direction, so that the base member 26 is rocked toward the downstream side in the rotational direction of the fifth rotary wheel H5.

Then, at a position at which the intermediate gripper GB is located closest to the sixth rotary wheel H6 (denoted by "GB3" in the drawing), the rocking cam 53 moves the rocking cam follower 52 toward the inner side in the radial direction to return the base member 26 to the neutral position.

After the intermediate gripper GB passes through the position closest to the sixth rotary wheel H6 (denoted by "GB4" in the drawing), the rocking cam 53 causes the rocking cam follower 52 to be located at a position more toward the inner side in the radial direction than the position of the rocking cam follower 52 in the neutral position so as to rock the base member 26 toward the upstream side in the rotational direction of the fifth rotary wheel H5.

The rocking unit 24 rocks the intermediate grippers GB in this manner and hence, the intermediate gripper GB2 located upstream of the intermediate gripper GB3 positioned in the neutral position inclines toward the downstream side, thus approaching the intermediate gripper GB3. In contrast, the intermediate gripper GB4 located downstream of the intermediate gripper GB3 inclines toward the upstream side, thus approaching the intermediate gripper GB3.

Intervals between the PET bottles 1 held by the intermediate grippers GB2, GB3, GB4 disposed adjacent to each other become equal to the conveyance pitch in the sixth rotary wheel H6, that is 30π. By opening and closing the intermediate gripper GB by the opening/closing unit 23 in the rocking zone A2, the PET bottles 1 are delivered from the intermediate grippers GB to the downstream grippers GC.

Then, in the intermediate gripper GB moved to a position downstream of the intermediate gripper GB4 (denoted by "GB5" in the drawing), the rocking cam 53 causes the rocking cam follower 52 to be located on the outer side in the radial direction and hence, causes the intermediate gripper GB to be positioned in the neutral position.

As a result, after the intermediate gripper GB passes through the rocking zone A2, the intermediate gripper GB is returned to the neutral position before reaching the upstream-side delivery position P1, at which delivery is made from the fourth rotary wheel H4, and hence, it is possible to deliver the PET bottles 1 from the fourth rotary wheel H4 at a conveyance pitch of 48π.

The switching unit 25 switches each intermediate gripper GB between the normal state shown in FIG. 3 and FIG. 4 and the retracted state shown in FIG. 5 and FIG. 6.

As shown in FIG. 3, the switching unit 25 includes air cylinders 61, switching rods 62, and opening units 63, each air cylinder 61 being fixed to each rocking shaft 26a, each switching rod 62 being coupled to each air cylinder 61, each opening unit 63 forcibly bringing each intermediate gripper GB into an open state by actuating the air cylinder 61.

As shown in FIG. 3, the air cylinder 61 is fixed to the rocking shaft 26a. The air cylinder 61 rocks integrally with the rocking shaft 26a, and causes a rod 61a of the air cylinder 61 to advance and retreat toward the outer peripheral side of the fifth rotary wheel H5.

A holding plate 64 having a plate shape is provided to the distal end part of the rod 61a, and one end of the switching rod 62 is coupled to the lower end part of the holding plate 64 via a ball joint 62a.

The switching rod 62 is provided in such a way as to penetrate through the base member 26 toward the outer peripheral side of the fifth rotary wheel H5. A link mechanism 65 is coupled to the other end part of the switching rod 62 via a ball joint 62a, the link mechanism 65 being coupled to the distal-end-side members 32b of the first and second gripping members 32A, 32B.

As shown in FIG. 4, the link mechanism 65 includes a link pin 65a and link levers 65b, the link pin 65a being coupled to the ball joint 62a disposed at the other end part of the switching rod 62, the link levers 65b being provided in such a way as to be openable relative to the link pin 65a. The distal end parts of the link levers 65b are rotatably coupled to the distal-end-side members 32b of the first and second gripping members 32A, 32B.

The link mechanism 65 causes the link levers 65b to be opened or closed about the link pin 65a in an interlocking manner with the opening and closing of the first and second gripping members 32A, 32B.

The opening unit 63 comprises a rocking lever 66 and a push plate 67, the rocking lever 66 being provided to the base member 26 in a rockable manner, the push plate 67 being provided to the holding plate 64 of the air cylinder 61.

The rocking lever 66 is provided to a support shaft 68 in a rockable manner, the support shaft 68 being fixed to the base member 26. The lower end part of the rocking lever 66 is movable forward and backward about the support shaft 68.

The lower end part of the rocking lever 66 passes through an elongated hole 26c (see FIG. 4), and is housed in a housing hole 35a of the opening/closing rod 35, the elongated hole 26c being provided in the upper surface of the base member 26. When the rocking lever 66 is rocked, the opening/closing rod 35 is moved forward or backward in an interlocking manner with rocking of the rocking lever 66.

A roller 69 is provided to the upper part of the rocking lever 66 via an arm. By moving the roller 69 upward and downward, the rocking lever 66 can be rocked about the support shaft 68.

The push plate 67 is caused to advance and retreat in the radial direction of the fifth rotary wheel H5 by the air cylinder 61. A step part 67a protruding downward is provided to the lower part of the distal end part of the push plate 67.

With the above-mentioned configuration, to bring the intermediate gripper GB into the normal state by the switching unit 25, the air cylinder 61 is contracted as shown in FIG. 3, and the opening unit 63 allows the opening/closing action of the first and second gripping members 32A, 32B.

In other words, when the air cylinder 61 is contracted, the push plate 67 is located on the outer side in the radial direction of the fifth rotary wheel H5, so that the roller 69 of the rocking lever 66 comes into contact with the rear part of the step part 67a of the push plate 67.

As a result, the roller 69 is located at an upper position, and the distal end of the rocking lever 66 is located on the inner side in the radial direction of the fifth rotary wheel H5 and hence, the opening/closing rod 35 is located on the inner side in the radial direction of the fifth rotary wheel H5.

At this point of operation, the opening/closing rod 35 is biased toward the inner side in the radial direction of the fifth rotary wheel H5 by the biasing force of the spring 43 constituting the opening/closing unit 23 and hence, the opening/closing cam follower 41 comes into contact with the opening/closing cam 42.

Consequently, when the intermediate gripper GB is brought into the normal state, and the air cylinder 61 is contracted, the opening/closing rod 35 of the opening/closing unit 23 is caused to advance and retreat and hence, the intermediate gripper GB performs an opening/closing action in the normal state shown in FIG. 4.

In contrast, to bring the intermediate gripper GB into the retracted state by the switching unit 25, the air cylinder 61 is extended as shown in FIG. 5, and the first and second gripping members 32A, 32B are forcibly brought into the open state by the opening unit 63.

In other words, when the push plate 67 is moved toward the inner side in the radial direction of the fifth rotary wheel by extending the air cylinder 61, the roller 69 of the rocking lever 66 comes into contact with the step part 67a of the push plate 67, thus being pushed downward.

Then, the lower end of the rocking lever 66 moves toward the outer side in the radial direction of the fifth rotary wheel H5, so that the opening/closing rod 35 is moved toward the outer side in the radial direction of the fifth rotary wheel H5 against the biasing force of the spring 43.

As a result, the opening/closing cam follower 41 provided to the opening/closing rod 35 is separated from the opening/closing cam 42, and the opening/closing pin 34 is moved and hence, the first and second gripping members 32A, 32B are opened as shown in FIG. 4(B).

When the opening unit 63 forcibly brings the first and second gripping members 32A, 32B into an open state in this manner, the pins 33 each of which couples the proximal-end-side member 32a and the distal-end-side member 32b to each other are coaxially aligned, and the link levers 65b of the link mechanism 65 are also opened in an interlocking manner with such alignment.

Simultaneously, by extending the air cylinder 61, the switching rod 62 is moved toward the inner side in the radial direction of the fifth rotary wheel H5 and hence, the link pin 65a of the link mechanism 65 is pulled toward the inner side in the radial direction.

As a result, the distal-end-side members 32b of the first and second gripping members 32A, 32B are pulled upward relative to the proximal-end-side members 32a about the pins 33.

The distal-end-side members 32b pulled upward in this manner are retracted to an area above a PET bottle 1, which is held by the upstream gripper GA of the fourth rotary wheel H4, to prevent interference with the PET bottle 1.

Hereinafter, the action of the beverage production line 2 having the above-mentioned configuration will be described.

First, a description will be made for an action in the case in which the beverage production line 2 is normally operated, and both the blow molding part 3 and the filling part 4 are normally operated.

First, in the blow molding part 3, parisons are molded into PET bottles 1 by the blow molding unit including the second rotary wheel H2 and, thereafter, the molded PET bottles 1 are conveyed by the fourth rotary wheel H4 as the upstream rotary wheel at a conveyance pitch of 48π.

At the upstream-side delivery position P1 at which delivery is made between the fourth rotary wheel H4 and the fifth rotary wheel H5, in the fifth rotary wheel H5, the rocking unit 24 causes the intermediate grippers GB to be positioned in the neutral position, and the switching unit 25 causes the intermediate grippers GB to be in the normal state as shown in FIG. 3.

Consequently, the interval between the adjacent intermediate grippers GB is equal to the interval between PET bottles 1 held by the upstream grippers GA of the fourth rotary wheel H4. When the opening/closing unit 23 opens and closes the first and second gripping members 32A, 32B of each intermediate gripper GB at the opening degree shown in FIG. 4(a) and FIG. 4(b), the PET bottle 1 is delivered.

When the delivery of the PET bottle 1 is completed at the upstream-side delivery position P1, and the fifth rotary wheel H5 is then further rotated, the rocking unit 24 conveys the PET bottle 1 while maintaining the intermediate gripper GB in the neutral position, that is, while maintaining a conveyance pitch of 48π, thus causing the PET bottle 1 to pass through an area below the injection nozzles 11, which constitute the sterilizing unit.

During such a conveyance, hydrogen peroxide vapor is injected into the PET bottle 1 by the injection nozzles 11 to sterilize the PET bottle 1.

When the flowmeter 16 detects an insufficient concentration of hydrogen peroxide vapor during the sterilization, the control unit 5 recognizes, by using an encoder not shown in the drawing or the like, the positions of the PET bottles 1 that passed the injection nozzles 11 during the period in which hydrogen peroxide vapor was not sufficiently generated.

Then, when the intermediate gripper GB holding the PET bottle 1 is located at a position above the reject box 12 shown in FIG. 2, the control unit 5 causes the air cylinder 61 of the switching unit 25 to be actuated to bring the intermediate gripper GB into the retracted state.

At this point of operation, the rocking lever 66 constituting the opening unit 63 moves the opening/closing rod 35, thus forcibly bringing the first and second gripping members 32A, 32B into the open state and hence, the PET bottle 1 gripped by the intermediate gripper GB falls into the reject box 12 to be collected.

Thereafter, the control unit 5 causes the air cylinder 61 to be actuated to switch the intermediate gripper GB in the retracted state to the normal state.

When the intermediate gripper GB of the fifth rotary wheel H5 approaches the downstream-side delivery position P2, at which delivered to the sixth rotary wheel H6, the rocking unit 24 rocks the intermediate gripper GB so as to reduce the interval between adjacent intermediate grippers GB, thus causing the conveyance pitch of the intermediate gripper GB to be equal to the conveyance pitch of the downstream gripper GC, that is 30π.

At this point of operation, the switching unit 25 causes the intermediate gripper GB to be in the normal state, and the intermediate gripper GB is caused to perform an opening/closing action as shown in FIG. 4(A) and FIG. 4(B). Accordingly, it is possible to deliver the PET bottle 1 to the downstream gripper GC of the sixth rotary wheel H6.

After the intermediate gripper GB passes through the downstream-side delivery position P2, at which delivered to the sixth rotary wheel H6, the rocking unit 24 rocks the intermediate gripper GB so as to return the intermediate gripper GB to the neutral position, thus causing the conveyance pitch of the intermediate gripper GB to be equal to the conveyance pitch of the upstream gripper GA of the fourth rotary wheel H4, that is 48π.

As described above, during the period in which the beverage production line 2 is normally operated, a conveyance pitch is adjusted by the fifth rotary wheel H5, thus allowing delivery between the blow molding part 3 and the filling part 4 having different conveyance pitches.

Next, a description will be made for an action in a case in which an abnormality occurs in the blow molding part 3, so that the fourth rotary wheel H4 is abnormally stopped.

As described above, the blow molding part 3 and the filling part 4 are driven by the different drive sources and hence, even in the case in which the blow molding part 3 is abnormally stopped, the action of the filling part 4 can be continued, thus allowing processing to be completed for PET bottles 1 held by the filling part 4.

However, when the fourth rotary wheel H4 is stopped, due to continuation of rotation of the fifth rotary wheel H5, the intermediate gripper GB collides with the PET bottle 1 held by the upstream gripper GA that is stopped at the upstream-side delivery position P1.

In view of the above, when the control unit 5 recognizes the occurrence of an abnormality in the blow molding part 3, the control unit 5 switches the intermediate gripper GB located at the upstream-side delivery position P1 to the retracted state shown in FIG. 5 and FIG. 6 by controlling the switching unit 25 for the intermediate gripper GB.

First, by extending the air cylinder 61, the push plate 67 of the opening unit 63 rocks the rocking lever 66, thus causing the opening/closing rod 35 to move forward toward the outer peripheral side and hence, the first and second gripping members 32A, 32B are forcibly brought into the open state.

In contrast, when the air cylinder 61 is extended, the switching rod 62 is moved toward the inner peripheral side, so that the distal-end-side members 32b coupled to the switching rod 62 are rotated upward and moved about the pins 33, each of which is provided between the distal-end-side member 32b and the proximal-end-side member 32a.

Consequently, at the upstream-side delivery position P1, the distal-end-side members 32b of the intermediate gripper GB are retracted upward relative to the PET bottle 1 held by the upstream gripper GA and hence, collision with the first and second gripping members 32A, 32B of the intermediate gripper GB can be avoided.

For intermediate grippers GB located downstream of the upstream-side delivery position P1 and already gripping PET bottles 1 at the time of occurrence of an abnormality, the switching unit 25 maintains the normal state to allow the PET bottles 1 to be delivered to the sixth rotary wheel H6 at the downstream-side delivery position P2.

When the intermediate gripper GB is brought into the retracted state by the switching unit 25, the distal-end-side members 32b of the first and second gripping members 32A, 32B are sprung upward and hence, even in the case in which the intermediate gripper GB is located at the delivery position P2, at which delivered to the sixth rotary wheel H6, and adjacent intermediate grippers GB are caused to approach each other, there is no possibility of interference between the first and second gripping members 32A, 32B of the adjacent intermediate grippers GB.

By the beverage production line 2 according to the present embodiment in this manner, even in the case in which the conveyance pitch in the fourth rotary wheel H4 differs from the conveyance pitch in the sixth rotary wheel H6, the intermediate grippers GB are rocked by the rocking unit 24, provided to the fifth rotary wheel H5, to adjust a conveyance pitch and hence, it is possible to deliver the PET bottles 1.

When the fourth rotary wheel H4, which constitutes the blow molding part 3, is stopped, the switching unit 25 provided to the fifth rotary wheel H5 brings the intermediate grippers GB into the retracted state and hence, it is possible to prevent collision of the intermediate grippers GB with the PET bottles 1 held by the upstream grippers GA.

As described above, in the present embodiment, the rocking unit 24 and the switching unit 25 are provided to the fifth rotary wheel H5, the rocking unit 24 rocking the intermediate grippers GB to adjust a conveyance pitch, the switching unit 25 allowing the intermediate grippers GB to avoid collision with the PET bottles 1 held by the upstream grippers GA. Accordingly, the number of rotary wheels constituting the container conveyance device 6 can be reduced, thus shortening the length of the line.

### Reference Signs List

- 1: PET bottle (container)
- 2: beverage production line
- 3: blow molding part
- 4: filling part
- 6: container conveyance device
- 23: opening/closing unit
- 24: rocking unit
- 25: switching unit
- 26: collision preventing unit
- GA: upstream gripper
- GB: intermediate gripper
- GC: downstream gripper
- H4: fourth rotary wheel (upstream rotary wheel)
- H5: fifth rotary wheel (intermediate rotary wheel)
- H6: sixth rotary wheel (downstream rotary wheel)

## Claims

1. A container conveyance device comprising: an upstream rotary wheel including an upstream gripper configured to grip a container; a downstream rotary wheel including a downstream gripper configured to grip the container; an intermediate rotary wheel provided between the upstream rotary wheel and the downstream rotary wheel, and including an intermediate gripper configured to grip the container; and an opening/closing unit configured to open and close a gripping member constituting the intermediate gripper, the container conveyance device being **characterized in that**
a conveyance pitch of the container in the downstream rotary wheel is set to be smaller than a conveyance pitch of the container in the upstream rotary wheel,
a rocking unit configured to rock the intermediate gripper is provided to the intermediate rotary wheel and, at a downstream-side delivery position, at which delivered to the downstream rotary wheel, a conveyance pitch of the container is caused to be equal to the conveyance pitch of the downstream gripper by rocking the intermediate gripper such that adjacent intermediate grippers approach each other,
a switching unit is further provided to the intermediate rotary wheel, the switching unit being configured to switch the gripping member of the intermediate gripper between a normal state and a retracted state, the container being delivered in the normal state, the gripping member being retracted to prevent interference with the container held by the upstream gripper in the retracted state, and
in a case in which the upstream rotary wheel is stopped, but rotation of the intermediate rotary wheel is continued, the switching unit switches the gripping member of the intermediate gripper from the normal state to the retracted state before the intermediate gripper reaches an upstream-side delivery position, at which the container is delivered from the upstream rotary wheel.

2. The container conveyance device according to claim 1, **characterized in that** the gripping member of the intermediate gripper is provided in such a way as to be movable upward, and the switching unit switches the gripping member of the intermediate gripper to the retracted state by moving the gripping member of the intermediate gripper upward.
